# FASCICULE DE BREVET EUROPEEN

(11) **EP 2 657 385 B1**
(45) Date de publication et mention de la délivrance du brevet: **11.02.2015**
(21) Numéro de dépôt: 13162823.2
(22) Date de dépôt: 08.04.2013
(51) Int. Cl.: B29C 70/08, D04B 21/16, D04H 3/04, B29C 70/20, D04H 3/045, D04H 3/115

(54) **Armature textile de renfort et procede de fabrication**
Textile Verstärkungseinlage, und Verfahren zu deren Hestellung
Textile reinforcement framework and method for manufacturing same

(30) Priorité: 23.04.2012 FR 1253671
(43) Date de publication de la demande: 30.10.2013
(73) Titulaire: Chomarat Textiles Industries, 07160 Le Cheylard (FR)
(72) Inventeur: Faure, Sébastien, 07160 SAINT MICHEL D'AURANCE (FR); Gault, Jean-Michel, 07160 LE CHEYLARD (FR)
(74) Mandataire: Cabinet Laurent & Charras

(56) Documents cités:
- EP-A1- 0 694 643
- EP-A1- 2 033 754
- EP-A1- 2 058 101
- EP-A2- 1 160 072
- WO-A1-98/10128
- FR-A1- 2 821 790
- FR-A1- 2 870 861
- "MULTI-AXIALE KETTENGEWIRKE ALS TEXTILE VERSTARKUNG IN FASERVERBUNDWERKSTOFFEN", MELLIAND TEXTILBERICHTE, DEUTSCHER FACHVERLAG, FRANKFURT AM MAIN, DE, vol. 70, no. 2, 1 février 1989 (1989-02-01), pages 109-112, XP000026288, ISSN: 0341-0781

## Description

### Domaine technique

L'invention se rattache au domaine des textiles techniques, et plus précisément des textiles destinés à former des armatures de renfort pour matériaux composites.

Elle concerne plus précisément la manière de réaliser une couche d'aspect sur ce type de renfort.

### Techniques antérieures

De façon générale, dans le domaine des matériaux composites, on emploie des armatures de renfort qui sont constituées de fils de haute ténacité qui sont orientés selon la ou les directions dans lesquelles on souhaite obtenir une résistance mécanique accrue.

Lorsque l'on recherche un renforcement dans plusieurs directions, il convient de combiner les fils de haute ténacité selon les différentes directions concernées. Cette combinaison peut se faire soit par tissage, soit de façon préférée par un empilement d'autant de nappes unidirectionnelles que nécessaires. De telles nappes peuvent en particulier être réalisées selon les enseignements du brevet EP 0 193 479.

En combinant donc différentes couches d'orientations distinctes selon la technique dite de « Cross-ply», on obtient des renforts multidirectionnels. L'association de ces différentes nappes superposées peut se faire de manière classique par une opération de couture/tricotage par exemple sur des machines de type Malimo.

Pour améliorer l'aspect extérieur des composites intégrant de telles armatures, il a été proposé de recouvrir les différentes nappes unidirectionnelles d'une couche formée d'un voile de surface. Ce voile de surface est constitué à partir de fibres de fibres de très faible titre, coupées et frisées pour conférer à cette couche une épaisseur et une certaine compressibilité.

Ce voile de surface constitue une réserve de résine ou plus généralement du matériau destiné à imprégner le renfort. En effet, il est utile pour assurer une adhésion optimale du renfort avec les éléments voisins, que le renfort soit totalement imprégné, et qu'il ne reste pas de zone où la résine soit moins présente.

Par ailleurs, la présence de ce voile d'aspect permet de compenser les effets de surface engendrés d'une part, par les coutures des couches entre elles, et par la forme de chacun des fils qui constituent les nappes unidirectionnelles. Ce voile de surface évite la formation d'excès de résine dans les zones de couture, et limite donc les effets de retrait après polymérisation de la résine.

Le caractère isotrope des voiles de surface réalisés à partir des fibres frisées fait que le voile n'a pas d'influence sur la direction de renforcement.

Toutefois, l'emploi de ce type de voile réalisé de manière indépendante présente toutefois quelques inconvénients.

En effet, la masse surfacique du voile est fixée par ses caractéristiques d'épaisseur et de composition, et ne peut être modifiée qu'en choisissant un voile différent. Dans le cas où l'on souhaite ajuster finement la masse surfacique du voile, il est nécessaire d'avoir à disposition un nombre important de voiles différents.

Par ailleurs, la largeur des voiles de surface disponibles sur le marché n'est que rarement identique à celle des renforts produits, de sorte que des chutes importantes et le plus souvent non réutilisables sont générées.

Un des objectifs de l'invention est donc de fournir un procédé qui soit plus souple pour permettre le réglage de la masse du voile de surface, et autant que possible avec une incidence sur le prix de revient de l'armature.

### Exposé de l'invention

L'invention concerne donc un procédé de fabrication d'une armature textile de renfort pour produits composites, dans lequel :
▪ on dépose au moins une nappe de renfort unidirectionnelle de fils de haute ténacité;
▪ on recouvre cette nappe d'une couche d'aspect ;
▪ on soumet l'ensemble à une étape de couture/tricotage permettant d'assurer une cohésion des couches superposées.

Conformément à l'invention, ce procédé se **caractérise en ce que** la couche d'aspect est déposée sous la forme d'une nappe de fils de ténacité inférieure à celle des fils de la nappe de renfort, ces fils étant parallèles et s'étendant d'une lisière à l'autre de l'armature.

Autrement dit, l'invention consiste à remplacer le voile de surface par un ensemble de fils individuels s'étendant selon une direction privilégiée, et sur la largeur seulement de l'armature.

En pratique, il est possible de régler l'inclinaison des fils de la couche d'aspect pour qu'ils présentent un angle compris entre 0 et 90° par rapport à la direction chaîne, et préférentiellement entre 30° et 90°. En pratique, lorsque l'orientation des fils de la couche supérieure n'est pas perpendiculaire à la direction chaine, on peut avantageusement déposer deux nappes d'orientations symétriques, pour équilibrer l'influence de ces nappes sur le renfort.

En pratique, le principe de l'invention peut s'appliquer à des armatures possédant également plusieurs couches de renfort superposées, avantageusement avec des orientations différentes.

L'invention concerne également une armature textile de renfort qui comporte au moins une couche de renfort formée d'une nappe unidirectionnelle de fils de haute ténacité, une couche d'aspect formant une des faces apparentes de cette armature, l'ensemble de ces couches étant associées par des fils de couture/tricotage.

Conformément à l'invention, la couche d'aspect est composée d'une nappe de fils parallèles, ces fils présentant un titre et une ténacité moindre que les fils de la couche de renfort.

Autrement dit, par le choix du titre des fils, de leur écartement, ainsi que leur inclinaison, on peut régler la masse surfacique de la couche d'aspect, et ce avec une grande précision.

Du fait que la couche d'aspect est formée de fils déposés d'une lisière à l'autre, il n'y a pas de découpe ou de chute réalisée, ce qui est favorable économiquement.

En pratique, les fils de couches de renfort peuvent être choisis dans le groupe comprenant des fils de verre, des fils de carbone, des fils aramide, des fils à base de fibres naturelles ou analogues. Complémentairement, les fils de la couche d'aspect peuvent être choisis dans le groupe des fils comprenant des fils de polyester, de polyamide, ou de polypropylène.

Avantageusement en pratique, les fils de la couche d'aspect sont texturés, ce qui donne à la nappe correspondante un certain gonflant, et une capacité de compression permettant d'assurer un état de surface le plus plan possible pour matériaux composites incorporant un tel renfort. Ainsi, de par leur gonflant, les fils texturés ont un pouvoir couvrant avantageux, car ils permettent d'avoir des nappes d'une bonne couverture pour une masse surfacique relativement faible.

En fonction du choix des fils et de leur orientation, on peut obtenir une couche d'aspect qui présente un poids compris entre 10 et 200 g/m².

Dans une forme de réalisation particulière, l'inclinaison des fils de la couche d'aspect peut être différente de l'ensemble des orientations des fils de couches de renfort. De cette manière, il est possible de l'utiliser pour la mise en place de ces fils, un trameur analogue à ceux permettant le dépôt des nappes de fils de renfort, adapté à des fils plus fins.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue en perspective sommaire d'une armature de renfort conforme à l'invention, dans laquelle chacune des couches n'a été représenté que sur une portion de la surface, afin que l'ensemble des couches soit apparente.
La figure 2 est une vue en perspective sommaire schématique d'une machine permettant la réalisation d'une armature conforme à l'invention.

### Manière de réaliser l'invention

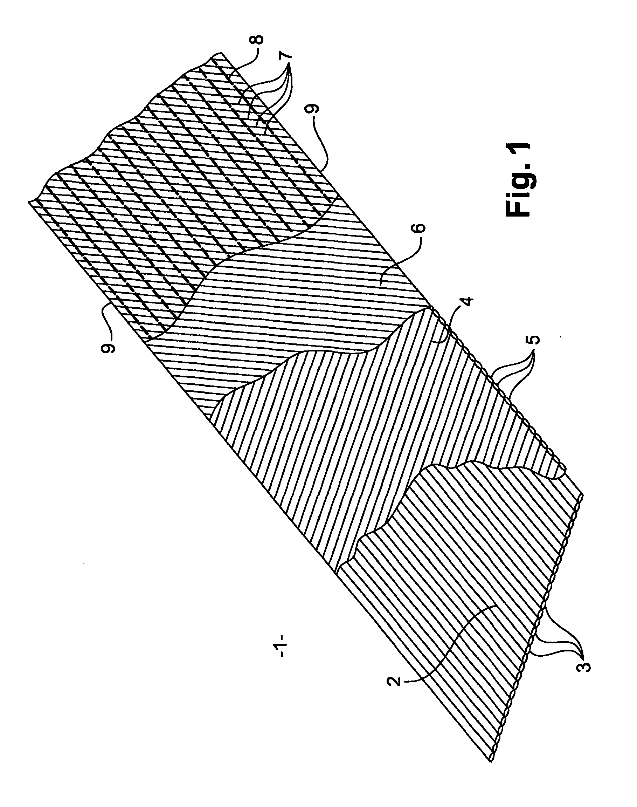

Dans la forme illustrée à la figure 1, une armature de renfort **1** est constituée d'un ensemble de couches de renfort **2**, **3** et d'une couche d'aspect **6.**

Plus précisément, la première couche de renfort **2** est constituée d'un ensemble de fils **3** s'étendant dans la direction chaîne, ces fils peuvent par exemple être constitués de rovings ou analogues, qui présentent une largeur de l'ordre du millimètre. Ces différents fils **3** peuvent être disposés parallèlement sans aucune liaison entre eux, ou bien encore associés par un moyen quelconque permettant la manipulation de la nappe **2.** Il peut ainsi s'agir d'un fil de liage transversal, avantageusement thermofusible, ou tout autre moyen équivalent.

La seconde nappe de renfort **4** est composée également d'un ensemble de fils **5,** de fils de haute ténacité, et par exemple en verre, qui s'étendent perpendiculairement aux fils de chaîne **3** de la première nappe.

Dans la forme illustrée, les fils de la seconde nappe **4** sont orientés à 90° par rapport à la direction chaîne, mais il est bien évident que l'invention n'est pas limitée à cette forme de réalisation, mais couvre toute les orientations possibles des fils de chacune des nappes de renfort.

De même, le nombre de nappes peut être supérieur à deux, et adapté en fonction des caractéristiques de renforcement souhaité. Il est également possible que les différentes nappes soient constituées avec des fils différents, voire même qu'une même nappe intègre différents types de fils.

Au-dessus de l'empilement des différentes couches de renfort **2, 4,** l'armature reçoit une couche d'aspect 6 qui formera la face apparente de l'armature.

Selon l'invention, cette couche d'aspect **6** est constituée d'une pluralité de fils **7.** Dans un exemple de réalisation, ces fils **7** sont des fils à base de polyester ayant subis un traitement de texturation par fausse torsion leur conférant un effet gonflant.

Le titre de tels fils est de l'ordre quelques dizaines à quelques centaines de decitex, et typiquement de 70 à 350 dtex.

Dans la forme illustrée à la figure 1, ces fils **7** sont orientés environ 45° par rapport à la direction chaîne, mais l'invention couvre bien évidemment toutes les variantes d'inclinaison allant d'un angle faible, proche de la direction chaîne, jusqu'à un angle élevé, quasiment perpendiculaire à la direction chaîne. Le réglage de cet angle d'inclinaison permet, pour un écartement entre fils constant, mesuré en lisière d'armature, de faire varier l'écartement des fils au sein de la couche d'aspect, et donc la masse surfacique de cette dernière. Il est également possible de déposer une ou plusieurs autres nappes, en particulier lorsque leur orientation n'est pas perpendiculaire à la direction chaine.

L'assemblage de la superposition des différentes couches de l'armature est réalisé par une opération de couture/tricotage, qui permet de mettre en place des fils **8** qui bloquent l'ensemble des nappes **2, 4, 6** entre elles. Une telle couture s'effectue de façon classique, de manière analogue à celle réalisée pour les renforts intégrant une couche de surface sous forme d'un voile pré-existant.

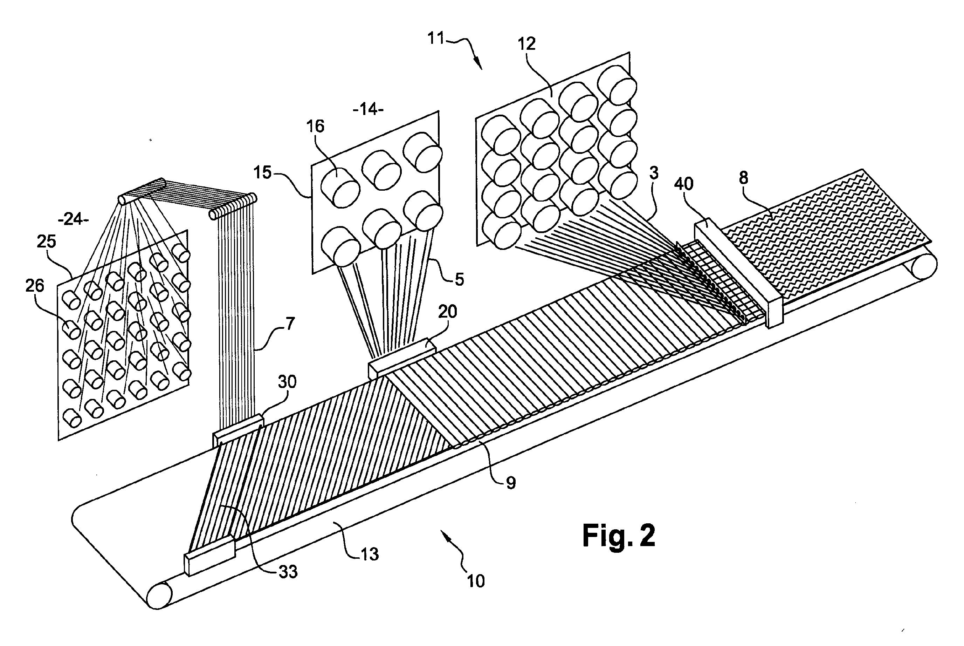

L'armature décrite à la figure 1 peut être en particulier réalisée à partir d'une machine fonctionnant sur le principe de celle illustrée à la figure 2.

Cette machine **10** comporte plusieurs trameurs permettant de déposer diverses nappes de fils sur la bande transporteuse, dans une direction formant un angle non nul avec la direction chaine. Selon les applications, un ou plusieurs trameurs peuvent être dédiés au dépôt de fils de renforts, et un ou plusieurs sont dédiés aux fils de la couche d'aspect. Il peut s'agir d'un trameur adapté pour différents types de fils, et en particulier dans le cas d'une machine susceptible de déposer plus de deux nappes de fils de renfort, et en particulier une nappe de fils de renfort à 30° ou 45° par rapport à la direction chaîne. Dans le cas où l'armature n'inclut pas de renfort dans cette direction, ce trameur peut avantageusement être utilisé pour déposer les fils de la couche d'aspect. Dans le cas particulier où la machine possède trois trameurs, un peut être utilisé pour déposer les fils de haute ténacité, et les deux autres sont alors dédiés au dépôt des fils texturés. Bien entendu, si la machine possède des trameurs supplémentaires, l'homme du métier pourra affecter chacun des trameurs à un type de fil voulu pour obtenir la configuration souhaitée.

Comme illustré à la figure 2, cette machine comporte donc une bande transporteuse **13** qui se déplace selon la direction chaîne.

Ainsi, la machine comporte un premier poste **24** dédié au dépôt de la couche d'aspect, qui comprend un cantre **25**, incluant une pluralité de bobines **26** délivrant des fils texturés. Ces fils sont pris en charge par le trameur **30** qui assure des déplacements d'une lisière à l'autre **9** pour assurer la dépose d'une nappe **33** de fils **7.** Ces fils sont maintenus au niveau des lisières **9** de la future armature par des mécanismes de mâchoires et de picots appropriés. Le trameur **30** réalise le dépôt des différentes nappes **22** au fur et à mesure de l'avancement de la bande transporteuse **13**, de manière à avoir une couverture continue. Ce trameur est de conception classique, de sorte qu'il n'est donc pas nécessaire de le décrire en détail.

Dans la mesure où il s'agit de fils de faible titre, le trameur **30** peut coopérer avec deux systèmes de picots et de mâchoires présents en lisière de machine, pour déposer les nappes **33** dans les deux sens du déplacement du trameur. Autrement dit, les fils **7** de la couche d'aspect restent continus et ne sont pas coupés en lisière mais déposés en optimisant le déplacement du trameur.

L'angle de dépose des fils **7** peut être réglé en fonction des applications, des fils employés et de la densité souhaitée de la couche.

La machine comporte également un deuxième poste **14** au niveau duquel un cantre **15** permet de dévider des bobines **16** comportant des fils **5** de la nappe de renfort. Bien entendu, le cantre **15** a été illustré de manière simplifié, et peut intégrer de multiples dispositifs classiques pour l'homme du métier pour assurer la formation de nappes de fils parallèles.

Les différents fils **5** sont pris en charge par un dispositif trameur **20**, apte à se déplacer d'une lisière à l'autre **9** de la nappe de fils de chaîne **3**. Ce trameur peut être analogue au trameur 30 et permet le dépôt de nappes **22** comportant un nombre de fils **5** déterminés. Ces fils sont maintenus au niveau des lisières **9** de la future armature par des mécanismes de mâchoire et de picots appropriés. Le trameur **20** réalise le dépôt des différentes nappes **22** au fur et à mesure de l'avancement de la bande transporteuse, de manière à avoir une couverture continue de la nappe de fils de texturés.

La machine **2** comporte un poste d'entrée **11** au niveau duquel les fils de chaîne **3** sont délivrés à partir d'un cantre 12 permettant de dévider les galettes de rovings et leur mise en configuration de nappes parallèles par des moyens traditionnels.

En aval du poste **24**, l'ensemble des couches superposées traverse un dispositif de couture/tricotage **40**, permettant de venir lier les différentes couches au moyen des fils de couture **8**.

L'ensemble de l'armature est ensuite renvidée de façon traditionnelle, pour un homme du métier.

Bien entendu, l'invention n'est pas limitée à ce mode de fabrication particulier. Ainsi, dans une variante non représentée, il est également possible que la nappe de fils texturés soit déposée en premier sur le convoyeur **13,** et reçoit ensuite les nappes de fils de renforts transversaux, l'ensemble étant ensuite recouvert par les fils orientés selon la direction chaîne qui sont déposés directement en amont de la tête de couture **40.**

Il ressort de ce qui précède que l'armature conforme à l'invention permet d'utiliser une nappe de fils texturés qui peut présenter un niveau de prix inférieur au voile employé jusqu'alors pour former la couche d'aspect des armatures de renforcement.

L'emploi d'un même fils texturé permet de déposer des nappes de poids surfacique différentes en jouant sur la densité des fils et l'inclinaison de la nappe, sans nécessiter d'approvisionnement spécifique.

La nappe de fils utilisée pour former la couche d'aspect présentant les dimensions de la machine, il n'est pas produit de chute à l'inverse des systèmes utilisant des voiles pré-existants.

## Revendications

1. Procédé de fabrication d'armature textile de renfort (1) pour produits composites, dans lequel :
▪ on dépose au moins une nappe de renfort (1) unidirectionnelle (2, 4) de fils (3, 5) de haute ténacité;
▪ on recouvre ladite au moins une nappe (2, 4) d'une couche d'aspect (6);
▪ on soumet l'ensemble à une étape de couture/tricotage permettant d'assurer une cohésion des couches superposées (2, 4, 6) ;
**caractérisé en ce que** la couche d'aspect (6) est déposée sous forme de nappe de fils (7) de ténacité inférieure à celle des fils (3, 5) de la nappe de renfort (2, 4) lesdits fils (7) étant parallèles et s'étendant d'une lisière (9) à l'autre de l'armature.

2. Procédé selon la revendication 1, dans laquelle on superpose au moins deux nappes de fils de renfort, lesdites nappes (2, 4) étant superposées avec des orientations différentes entre deux nappes successives.

3. Procédé selon la revendication 1, **caractérisé en ce que** les fils (7) de la couche d'aspect présentent un angle compris entre 0 et 90° par rapport à la direction chaîne.

4. Procédé selon la revendication 1, **caractérisé en ce que** les fils (7) de la couche d'aspect présentent un angle compris entre 30° et 90° par rapport à la direction chaîne.

5. Armature textile de renfort (1) comportant au moins une couche de renfort (3, 4)formée d'une nappe unidirectionnelle de fils de haute ténacité, et une couche (6) d'aspect formant une des faces apparentes de ladite armature, l'ensemble des couches (2, 4, 6) étant associées par des fils (8) de couture/tricotage, **caractérisée en ce que** la couche d'aspect (6) est composée d'une nappe de fils parallèles (7), lesdits fils (7) présentant un titre et une ténacité moindre que les fils (3, 5) de la couche de renfort (2, 4)

6. Armature selon la revendication 5, **caractérisée en ce qu'**elle comporte plusieurs couches de fils de renfort superposées.

7. Armature selon la revendication 5, **caractérisée en ce que** les fils (3, 5) de la couche de renfort sont choisis dans le groupe comprenant les fils de verre, les fils de carbone, les fils d'aramide, les fils de basalte, les fils à base de fibres naturelles.

8. Armature selon la revendication 5, **caractérisée en ce que** les fils (2) de la couche d'aspect sont choisis dans le groupe comprenant les fils de polyester, de polyamide, de polypropylène.

9. Armature selon la revendication 5, **caractérisée en ce que** les fils (2) de la couche d'aspect sont texturés.

10. Armature selon la revendication 5, **caractérisée en ce que** la couche d'aspect présente un poids compris entre 10 et 200 .g/m².

11. Armature selon la revendication 4, **caractérisée en ce que** les fils de la couche d'aspect présentent une orientation comprise entre 30° et 90°par rapport à la direction de chaîne.

12. Armature selon la revendication 5, **caractérisée en ce que** les fils de la couche d'aspect présentent une orientation différente de toutes les orientations des fils des couches de renfort.

## Patentansprüche

1. Verfahren zur Herstellung einer textilen Verstärkungsbewehrung (1) für Verbundprodukte, bei dem:
▪ mindestens eine in einer Richtung verlaufende (2, 4) Verstärkungslage (1) aus Fäden (3, 5) hoher Zähigkeit abgelegt wird;
▪ diese mindestens eine Lage (2, 4) mit einer Sichtschicht (6) bedeckt wird;
▪ das Ganze einem Näh-/Strickschritt unterzogen wird, der es ermöglicht, eine Kohäsion der übereinanderliegenden Schichten (2, 4, 6) sicherzustellen;
**dadurch gekennzeichnet, dass** die Sichtschicht (6) in Form einer Lage aus Fäden (7) mit einer Zähigkeit, die geringer ist als diejenige der Fäden (3, 5) der Verstärkungslage (2, 4), abgelegt wird, wobei die Fäden (7) parallel sind und sich von einem Rand (9) der Bewehrung zum anderen erstrecken.

2. Verfahren nach Anspruch 1, wobei mindestens zwei Lagen aus Verstärkungsfäden übereinandergelegt werden, wobei die Lagen (2, 4) mit unterschiedlichen Ausrichtungen zwischen zwei aufeinanderfolgenden Lagen übereinandergelegt werden.

3. Verfahren nach Anspruch 1, **dadurch gekennzeichnet, dass** die Fäden (7) der Sichtschicht einen Winkel aufweisen, der in Bezug auf die Kettrichtung zwischen 0 und 90° beträgt.

4. Verfahren nach Anspruch 1, **dadurch gekennzeichnet, dass** die Fäden (7) der Sichtschicht einen Winkel aufweisen, der in Bezug auf die Kettrichtung zwischen 30° und 90° beträgt.

5. Textile Verstärkungsbewehrung (1), die mindestens eine Verstärkungsschicht (3, 4), die aus einer in einer Richtung verlaufenden Lage aus Fäden hoher Zähigkeit gebildet ist, und eine Sichtschicht (6) umfasst, die eine der sichtbaren Seiten der Bewehrung bildet, wobei die Einheit der Schichten (2, 4, 6) durch Näh-/Strickfäden (8) verbunden ist, **dadurch gekennzeichnet, dass** die Sichtschicht (6) aus einer Lage paralleler Fäden (7) besteht, wobei die Fäden (7) eine geringere Feinheit und Zähigkeit aufweisen als die Fäden (3, 5) der Verstärkungsschicht (2, 4).

6. Bewehrung nach Anspruch 5, **dadurch gekennzeichnet, dass** sie mehrere übereinanderliegenden Schichten aus Verstärkungsfäden umfasst.

7. Bewehrung nach Anspruch 5, **dadurch gekennzeichnet, dass** die Fäden (3, 5) der Verstärkungsschicht aus der Gruppe ausgewählt sind, die Glasfasern, Carbonfasern, Aramidfasern, Basaltfasern, Fäden auf Basis von Naturfasern umfasst.

8. Bewehrung nach Anspruch 5, **dadurch gekennzeichnet, dass** die Fäden (2) der Sichtschicht aus der Gruppe ausgewählt sind, die Polyester-, Polyamid-, Polypropylenfäden umfasst.

9. Bewehrung nach Anspruch 5, **dadurch gekennzeichnet, dass** die Fäden (2) der Sichtschicht texturiert sind.

10. Bewehrung nach Anspruch 5, **dadurch gekennzeichnet, dass** die Sichtschicht ein Gewicht zwischen 10 und 200 g/m² aufweist.

11. Bewehrung nach Anspruch 4, **dadurch gekennzeichnet, dass** die Fäden der Sichtschicht eine Ausrichtung aufweisen, die zwischen 30° und 90° in Bezug auf die Kettrichtung beträgt.

12. Bewehrung nach Anspruch 5, **dadurch gekennzeichnet, dass** die Fäden der Sichtschicht eine Ausrichtung aufweisen, die sich von allen Ausrichtungen der Fäden der Verstärkungsschichten unterscheidet.

## Claims

1. Method for manufacturing a textile reinforcement framework (1) for composite products, wherein:
- At least one unidirectional (2, 4) reinforcement ply (1) of high-tenacity yarns (3, 5) is laid;
- The said ply (2, 4) is covered with a face layer (6);
- The entire unit undergoes a sewing/knitting stage to ensure cohesion of the superposed layers (2, 4, 6);
**characterized in that** the face layer (6) is laid in the form of a layer of yarns (7) which has a tenacity lower than that of yarns (3, 5) of the reinforcement ply (2, 4), the said yarns (7) being parallel and extending from one selvedge (9) of the framework to the other.

2. Method according to claim 1, wherein at least two reinforcement yarn layers are superposed, the said layers (2, 4) being superposed in different orientations between two successive layers.

3. Method according to claim 1, **characterized in that** the yarns (7) of the face layer form an angle between 0° and 90° with respect to the warp direction.

4. Method according to claim 1, **characterized in that** the yarns (7) of the face layer form an angle between 30° and 90° with respect to the warp direction.

5. Textile reinforcement framework (1) comprising at least one reinforcement layer (3, 4) consisting of a high-tenacity unidirectional yarn sheet, and a face layer (6) which comprises one of the visible surfaces of the said framework, all layers (2, 4, 6) being connected by sewing/knitting yarns (8), **characterized in that** the face layer (6) consists of a parallel yarn layer (7), the said yarns (7) having a thickness and tenacity lower than that of the (3, 5) reinforcement layer yarns (2, 4)

6. Framework according to claim 5, **characterized in that** it comprises multiple superposed reinforcement yarn layers.

7. Framework according to claim 5, **characterized in that** the yarns (3, 5) of the reinforcement layer are chosen from the group comprising glass, carbon, aramid fibre, basalt and natural fibre-based yarns.

8. Framework according to claim 5, **characterized in that** the yarns (2) of the face layer are chosen from the group comprising polyester, polyamide and polypropylene yarns.

9. Framework according to claim 5, **characterized in that** the yarns (2) of the face layer are textured.

10. Framework according to claim 5, **characterized in that** the face layer weighs between 10 and 200 g/m².

11. Framework according to claim 4, **characterized in that** the yarns of the face layer form an angle between 30° and 90° with respect to the warp direction.

12. Framework according to claim 5, **characterized in that** the orientation of the yarns of the face layer is different from all orientations of the reinforcement layers yarns.
